# EUROPEAN PATENT APPLICATION

(11) **EP 4 194 980 A1**
(43) Date of publication of application: **14.06.2023**
(21) Application number: 21213723.6
(22) Date of filing: 10.12.2021
(51) Int. Cl.: G05B 23/02

(54) **REMOTE ANALYSIS OF BALLAST WATER TREATMENT SYSTEMS**

(71) Applicant: AlfaWall Aktiebolag, 147 80 Tumba (SE)
(72) Inventor: ALVÁN, Jonas, SE-167 64 BROMMA (SE); BOMAN, Jesper, SE-149 50 NYNÄSHAMN (SE)
(74) Representative: Alfa Laval Attorneys

(57) **Abstract**

The present disclosure relates to a method of a controller device (100) of remotely analysing performance of a ballast water treatment system (BWTS, 1) of a marine vessel and a controller device (100) performing the method.

In a first aspect, a method of a controller device (100) of remotely analysing performance of a BWTS (1) of a marine vessel is provided. The method comprises acquiring (S101) data from the BWTS (1) associated with the treatment of the ballast water, determining (S102), based on the acquired data, a recommended BWTS maintenance action to be performed and alerting (S103) an operator of the BWTS (1) of the recommended BWTS maintenance action to be performed.

## Description

### TECHNICAL FIELD

The present disclosure relates to a method of a controller device of remotely analysing performance of a ballast water treatment system of a marine vessel and a controller device performing the method.

### BACKGROUND

Ships may be arranged with ballast water tanks that are filled to stabilize the ships when not fully loaded with cargo. That is, when a ship has offloaded its cargo at a port in a first location and then receives instructions to pick up another cargo in a port at a second location, the ballast water tanks of the ship are filled with sea water from the first location.

When the ship then reaches the port in the second location, the ballast water tanks are emptied and the ship is provided with new cargo. The sea water contains dirt and therefore it needs to be treated, including filtration, before filling the tanks and/or before emptying the tanks at the second location. Before emptying the ballast water tanks, referred to as de-ballasting, the ballast water is also treated in order to eliminate organisms in the water utilizing a ballast water treatment system (BWTS). The organisms need to be eliminated since the transported species may be completely different from normal species of the second location and may thus cause large ecological problems. It is well known that species that are transported from their normal environment to a new environment can cause great problems. For example, the transported species may not have natural enemies in the new environment. Alternatively, the local species may obtain diseases and be wiped out by the transported species, etc.

Prior art ballast water treatment systems are stationary and data collected by the systems are generally difficult to acquire from the systems. As a result the system performance is not easy to analyse. This is especially problematic in case of failure in the ballast water system and when it is not possible to contact service personnel when the vessel is far away from a harbour. There is thus room for improvement of prior art ballast water treatment systems.

### SUMMARY

One objective is to solve, or at least mitigate, this problem in the art and to provide a controller device configured to remotely analyse performance of a ballast water treatment system of a marine vessel. A further objective is to facilitate proactive assistance in maintenance, repair and operation of the ballast water treatment system, that is already before a problem has been identified.

One further objective is to aid in maintenance, repair and operation of the ballast water treatment system when the marine vessel is located far away from a harbour and when it is not possible to contact service personnel.

This is attained in a first aspect by a method of a controller device of remotely analysing performance of a ballast water treatment system (BWTS) of a marine vessel. The method comprises acquiring data from the BWTS associated with the treatment of the ballast water, determining, based on the acquired data, a recommended BWTS maintenance action to be performed and alerting an operator of the BWTS of the recommended BWTS maintenance action to be performed.

This is attained in a second aspect by a controller device configured to remotely analyse performance of a BWTS of a marine vessel. The controller device comprises a processing unit and a memory, which memory contains instructions executable by said processing unit, whereby the controller device is operative to acquire data from the BWTS associated with the treatment of the ballast water, to determine, based on the acquired data, a recommended BWTS maintenance action to be performed and to alert an operator of the BWTS of the recommended BWTS maintenance action to be performed.

Advantageously, the controller device acquires data from the BWTS and evaluates the acquired data for providing a recommendation of an action to be performed based on the evaluation to an operator of the BWTS. For instance, the controller device may conclude by evaluating the acquired data that a maintenance action needs to be performed in other to uphold BWTS performance and alert the operator accordingly.

In an embodiment, data in the form of an error code is acquired from the BWTS associated with the treatment of the ballast water and a recommended BWTS maintenance action to be performed is determined based on the acquired error code.

In an embodiment, each acquired error code is associated with a recommended BWTS maintenance action to be performed.

In an embodiment, data in the form of one or more measured values of a parameter associated with the treatment of the ballast water is acquired and it is determined whether or not said one or more measure values comply with a maintenance criterion and if so, a recommended BWTS maintenance action to be performed is determined based on said parameter.

In an embodiment, the controller device receives an indication when the recommended BWTS maintenance action has been performed.

In an embodiment, one or more further instances of said data from the BWTS is acquired and it is determined from the one or more further instances of said data whether or not the recommended BWTS maintenance action was successful.

In an embodiment, another recommended BWTS maintenance action to be performed is determined based on the one or more further instances of acquired data from the BWTS and the operator of the BWTS is alerted of said another recommended BWTS maintenance action to be performed.

In an embodiment, confirmations for recommended BWTS maintenance actions having been successfully performed are accumulated.

In an embodiment, data from the BWTSs of a plurality of marine vessels is acquired and it is determined, based on the acquired data of each BWTS, a recommended BWTS maintenance action to be performed for the marine vessel associated with said each BWTS, wherein an operator of said each BWTS is alerted of the recommended BWTS maintenance action to be performed.

In an embodiment, order of priority of a recommended BWTS maintenance action among a plurality of possible recommended BWTS maintenance actions is based on work effort required for performing the action.

In an embodiment, order of priority of a recommended BWTS maintenance action among a plurality of possible recommended BWTS maintenance actions is based on historical data indicating how successful a recommended action has been.

In an embodiment, the recommended BWTS maintenance action is further configured to comprise article number of an object to be changed.

In an embodiment, the alert is provided to the operator as a visual instruction on how the recommended BWTS maintenance action is to be performed.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 shows an example of a prior art BWTS the performance of which a controller device according to an embodiment remotely may analyse;
Figure 2 illustrates a controller device according to an embodiment in wireless communication with a BWTS control unit;
Figure 3 shows a flowchart illustrating a method of a controller device of remotely analysing performance of a BWTS according to an embodiment;
Figure 4 shows a flowchart illustrating a method of a controller device of remotely analysing performance of a BWTS according to a further embodiment;
Figure 5 shows a flowchart illustrating a method of a controller device of remotely analysing performance of a BWTS according to yet a further embodiment;
Figure 6 illustrates a controller device according to an embodiment acquiring data from BWTSs of a plurality of ships; and
Figure 7 illustrates a controller device according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Daily, large amounts of ballast water is transported around the world. Therefore, the International Maritime Organization of UN has issued a convention that puts demand on all commercial ships to be equipped with and use special systems for handling ballast water. In treating ballast water in ships, it is very important that no untreated water can leave the ship. Therefore, it is important that ballast water treatment equipment is controlled and monitored so that a safe and optimal function are ensured. Further, it is important to be able to indicate malfunction of different parts of the system so that appropriate measures can be taken. Also, the safety of the ship must be ensured.

As previously mentioned, ballast water treatment systems (BWTS) are arranged to treat sea water before discharging ballast water back to sea. During ballast operation (ballasting), sea water is pumped from the sea and led through a filter, which removes larger particles and organisms. After filtration the sea water is supplied to a treatment unit for neutralizing living organisms in the ballast water. By neutralizing is meant rendering the living organisms non-viable or dead.

There are several types of treatment units that can be used downstream of the filter unit on the market. For example, chemical treatment units, in which living organisms are oxidized to neutralize them, can be used. An example of such unit is an electro-chemical system in which electro chlorination is used for producing oxidizing disinfectants from sea water. Before discharging the ballast water back to the sea, the total residual oxidant content (TRO) needs to be below an acceptable level for discharge. TRO can be decreased for example by the addition of sodium thiosulphate. Managing the TRO levels needs determination of the TRO by means of a sensor.

Another example of a treatment unit is a UV-reactor comprising one or more UV-lamps, where the water is treated with UV light. In the UV-reactor UV-lamps radiate the sea water with high intensity. The UV lamps may be powered by lamp power supplies in a lamp drive cabinet. It is important that the UV-lamps have high intensity, and therefore the UV-reactor needs to be cleaned in between ballast operations to remove any dirt or scaling. The reactor can be cleaned for example by using a cleaning in place (CIP) operation module. When cleaned, the reactor is first rinsed with fresh water, and then a cleaning liquid, which may be acidic and comprise e.g. citric acid, is circulated through the reactor. At the end of the process the reactor can be filled with fresh water.

The UV-reactor and ongoing processes can be controlled and monitored by a control unit. The control can also be performed from remote control panels and/or the vessel's integrated or main control system, for example via remote interface.

Fluid flow in the ballast water system can be monitored by one or more flow meters and regulated by means of one or more control valves, which may be connected to the control unit.

During ballasting, the ballast water treatment system is started. In case a UV-reactor is used, the UV-lamps in the reactor are heated. When the lamps are ready, the ballast water pump is started, either by an operator or automatically. The ballast water is then pumped from the sea chest to the filter, which removes larger particles and organisms. This also reduces the amount of sediment build-up in the ballast water tanks. The organisms and sediments caught in the filter are flushed overboard via regular filter backflush operations. After filtration, the water is fed to the UV-reactor, in which living organisms are neutralized. If the UV-intensity of one or more lamps in the reactor fall below minimum, the treatment may be continued but a system alert may be created. However, to ensure that treatment requirements are fulfilled with the lower intensity, the process may be modified so that the flow is decreased. If the reduction of the flow is not sufficient, it is possible to increase the intensity of the lamps. If these actions are not sufficient, the treatment operation may have to be stopped.

To keep the filter of the ballast water treating system clean, it can be automatically backflushed. The backflush operation can be performed during ongoing process without interrupting the ballasting process. The backflushing does not have to interrupt the filtration process, if only a part of the filter element area is cleaned. The areas that are not cleaned at a specific time can continue the filtration of the ballast water. It is also possible to start backflush manually from the control system. When the ballast operation is stopped, the backflush can be performed before the system comes to a full stop. The water used for backflushing can be returned to the sea directly at the ballasting site. To secure efficient filtration, the backflush operation is performed at determined time set intervals or it may be triggered by indication of dirt in the filter. Pressure drop over the filter, i.e. differential pressure, can be monitored by pressure transmitters, which can be located on the filter inlet and outlet. Dirt can be detected by an increased differential pressure caused by particles in the filter. When the differential pressure reaches a reference value, an automatic backflush operation starts.

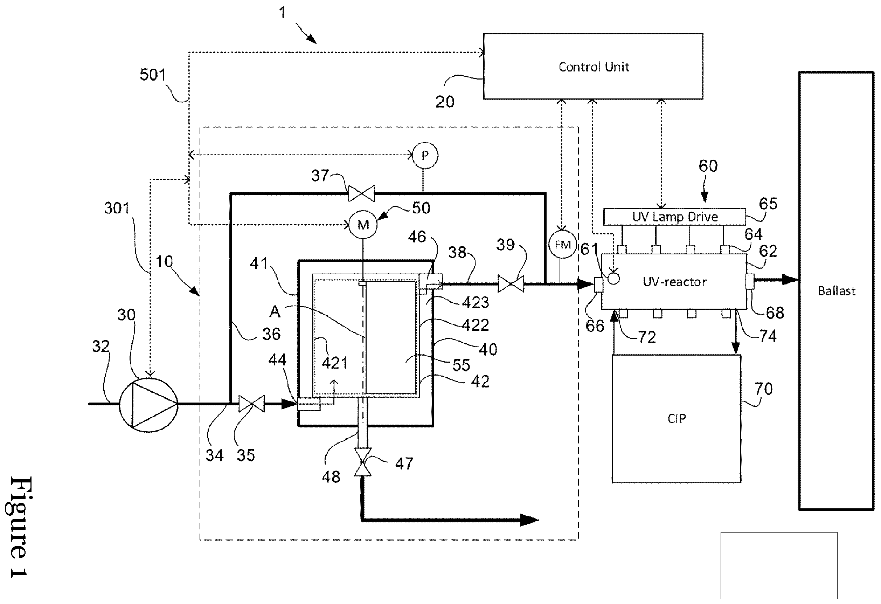

Reference is now made to Figure 1, in which an example of a ballast water treatment system (BWTS) 1 is schematically shown and in which system embodiments may be implemented.

The BWTS 1 includes a ballast water filter arrangement 10 and Figure 1 shows the system during ballasting. The BWTS 1 is controlled by a control unit 20. During ballasting sea water is pumped by means of a ballast water pump 30 through a sea water inlet 32. By ballasting is meant a process by which sea water is taken into a ship when the ship is e.g. at a port or at sea. The purpose of the ballast water carried in ballast tanks is to ensure the stability of the ship. De-ballasting is a process by which sea water is taken out of the ship when the ship is at the port or at the sea. The ballast tanks are connected to a piping system and ballast pumps to carry out the ballasting and de-ballasting operations.

The ballast water pump 30 is controlled by the control unit 20 and can be arranged connected to the control unit via a two-way physical or wireless connection 301. The ballast water pump 30 maybe arranged upstream or downstream of the ballast water filter arrangement 10. In the illustrated Figure 1, the pump 30 is arranged upstream of the ballast water filter arrangement 10.

Sea water is pumped to a filter unit 40 via a filter unit inlet line 34. The inlet line 34 may comprise a first closing valve 35 to stop the flow through the filter, e.g. in case of failure. During a normal ballasting operation however, the sea water is fed through the inlet line 34 to a water inlet 44 of the filter unit 40. The filter arrangement 10 may comprise a by-pass line 36 including a closing valve 37. The by-pass line 36 may have a line branch upstream of the closing valve 35. The filter arrangement 10 further comprises a water outlet line 38 in fluid connection with a filter outlet 46. Downstream of the filter outlet 46, a further, third closing valve 39 may be located. A second branch of the by-pass line 36 may be connected to the outlet line 38 downstream of the third closing valve 39, and upstream of a treatment unit, which in this illustrated example is a UV-reactor 60.

The filter unit 40 comprises a filter element 42 with an inlet side 421 and an outlet side 422. The filter element can be surrounded by a filter unit housing 41. The filter element 42 is not displayed in detail in the schematic drawing of Figure 1. However, the filter element may be of any known type and may comprise for example a filter media which is inserted between two or more hollow cylindrical filter element housings, i.e. inner and outer filter element housings. Each of the housings may have perforated cylinder wall to assist in filtering while allowing the water to flow through. The filter media may be of any known type and may e.g. comprise a screen of polymeric material, such as polypropylene-based material, and/or metallic or ceramic material. The screen has a suitable mesh size, which is adapted for sea water filtration. Suitably, the filter element comprises materials that are corrosion resistant and suitable for use in saline sea water conditions. The filter element can be adapted to filter both living organisms as well as waste, such as plastic, from the sea water. The inner and outer filter media housings may have for example a circular cylindrical shape, although other shapes may be conceivable.

As schematically shown in Figure 1, the inlet side 421 of the filter element 42 is arranged in fluid communication with the filter unit inlet line 34 through which unfiltered sea water, i.e. sea water that has not passed through the filter element 42, is pumped during ballasting in a first flow direction to the filter unit 40. The first flow direction is depicted by arrows in Figure 1. The unfiltered sea water may according to a variant be fed into the filter unit 40 via the filter inlet 44 located at a bottom of the filter unit 40. The filter inlet 44 is adapted to lead the flow of unfiltered sea water radially inwards of the filter element 42, i.e. close to a centrum axis A of the filter unit 40. The water flow may be arranged in a tangential way so that the sea water passes the filter element in a direction from the inlet side 421 to the outlet side 422, which is located radially outwards from the inlet side 421. All matter having a size larger than a mesh size of the filter element will be trapped in the filter element. This means that the filter element will become clogged by the trapped material unless it is cleaned at certain intervals. The cleaning may be performed by backflushing, e.g. when the ballasting is performed or at pre-determined intervals. The filter unit 40 further comprises the filtered sea water outlet 46 through which the filtered water is arranged to flow, and a backflush outlet 48, which is equipped with a fourth closing valve 47.

The filter arrangement 10 of the present disclosure is self-cleaning and comprises a backflushing arrangement 50 with a movable backflush element 55. The backflush element 55 is configured to move over the filter element 42 and the inlet side 421 thereof, and remove material trapped thereto. During a backflushing mode of the filter device, the fluid flow direction is temporarily reversed.

The movable backflush element 55 is configured to rotate around an axis of rotation, which corresponds to the center axis A of the filter unit 40. The backflush element 55 is driven by a motor M, which may be a geared motor, which is configured to drive a rotational movement of a backflush element 55. The motor M is connected to the control unit 20 and may be controlled by the control unit 20. For example, the control unit 20 may include an inverter inside the unit 20, which is configured to control the rotation speed of the motor. The motor may also be a standard motor controlled by the inverter included in the control unit 20. The standard or geared motor can be arranged connected to the control unit via a two-way physical or wireless connection 501.

During filtration, i.e. normal ballasting operation. The water enters the filter unit 40 from the inlet line 34 and flows through the filter element 42 from the inlet side 421 to the outlet side 422. The filtered dirt is trapped on the inlet side 421 of the filter element 42. The filtered water passes the chamber 423 and flows out from the filter through the outlet 46 and is lead into the ballast tank. During the filtration, the filter operates as a static filter, there are no moving parts and the motor M is not running and the backflush element 55 is standing still.

At backflush, the motor M starts to drive the backflush element 50. At the same time, the fourth closing valve 47, i.e. a backflush valve 47 opens. The backflush element 55 rotates inside the filter element 42. The dirt on the inlet side 421 of the filter element is cleaned by a high-efficacy backflush flow in front of the nozzle. The backflush flow uses filtered water from the chamber 423 to clean the filter from the outlet side 422 to the inlet side 423. The water, together with the dirt, is lead via the backflush element 55 through the backflush outlet 48 and out via the backflush valve 47.

When the backflush is done, the motor stops, and the backflush valve 47 is closed. The filter then goes back to filtration with full flow to the ballast tank.

The BWTS 1 in Figure 1 further comprises the UV-reactor 60 as a treatment unit, as previously mentioned. The treatment unit could alternatively be a chemical treatment unit, as explained above.

The UV-reactor comprises in Figure 1 a reactor vessel 62 including a plurality of UV-lamps 64, only one of which is depicted with a reference sign. The lamps 64 are in turn connected to a lamp drive cabinet 65, which gives power to the UV-lamps in the UV-reactor. The filtered sea water is treated in the UV-reactor, where the UV-light inactivates cell DNA to neutralize living organisms by preventing regrowth of organisms. The UV-light also generates radicals. The radicals are extremely reactive and react instantaneously with micro-organisms and other organic contaminants destructing their membranes. The radicals are short-lived and exist only for some milliseconds. This means that they will only exist inside the UV-reactor. The quantity of radicals produced in the reactor is sufficient to treat the water as it passes through the reactor. Therefore, in the UV-treatment unit, there are no chemical substances added to the treatment process, and there are no toxic residuals created. Since the water is not affected chemically there is no hazardous environmental impact.

The UV-reactor 60 further comprises a ballast water inlet 66, and a ballast water outlet 68, fresh water and/or cleaning liquid inlet 72 and outlet 74, and one or more sensors 61 configured to detect the UV-intensity provided by the lamps 64 in the reactor. The number of lamps may vary, and maybe for example from 10-30, e.g. 20 lamps. The UV lamps are enclosed in individual quartz-glass sleeves.

When the lamps are lit, they may become very warm. Therefore, they are usually cooled whenever they are lit. To secure that there is sufficiently ballast water to be purified in the reactor when the lamps are lit, each reactor may be equipped with a level sensor and/or switch. The level switch may also secure that sufficient level of cleaning liquid is pumped into the reactor during the cleaning-in-place (CIP) process performed by CIP operation module 70. To secure that the lamps are adequately cooled by the ballast water, each UV-reactor may be equipped with a temperature sensor or switch (not shown). The sensor may be connected to the control unit 20 which may be configured to shut down the reactor at a pre-determined temperature, e.g. about 60 °C. The reactor may also comprise a switch which automatically shuts the reactor if the temperature is higher than a determined temperature, e.g. about 65-70 °C.

The reactor may also comprise one or more UV sensors 61, which monitor the UV lamp efficiency in relation to the water transmittance inside the UV-reactor. Based on this input, the power to the UV-lamps can be regulated between 50 and 100 % of full capacity. During operation, the UV lamps may be dimmed to lowest possible level, where they are still effective.

The lamp drive cabinet 65 containing lamp power supplies powers the UV-lamps in the UV-reactor connected to the lamp drive cabinet 65. The lamp drive cabinet 65 may be connected remotely to the UV-reactor 62. The lamp power supplies may be also configured to monitor the function of each UV lamp and take an action if a fault occurs. The lamp drive cabinet 65 may be equipped with a cooling system to maintain correct operating temperature.

The ballast water treatment system 1 further comprises the control unit 20, which can be used to control and monitor the entire system. The control unit 20 may also be used to communicate with the vessel's other systems and components, if integrated. The control unit may be integrated with remote interfaces. The control unit may comprise an integrated control panel at the same location or at a remote location. The control system may be used to set parameters, operate, and monitor the BWTS.

Now, a problem with prior art BWTS systems is that while the control unit 20 measures and monitors various parameters in the BWTS 1 as described and controls the system based on the monitored parameters, it is not easy and straightforward for an operator of the BWTS 1 to understand which system maintenance actions are to be taken and how to perform these actions upon the control unit 20 detecting for instance that a value of a parameter is out of an allowable operation range.

For instance, assuming that the control unit 20 detects that UV-intensity of the UV-lamps 64 is too low, the control unit 20 will present an error code on a control panel in a control room typically accommodating personnel such as BWTS operators. An operator will thereafter have to consult a BWTS operating manual for determining an error description associated with the error code. In an example, this may appear as: "Error code: A-915, Source: UV lamp intensity too low: Action: Perform CIP process".

As is understood, this is both a complicated and time-consuming process for maintenance personnel and operators of the system. Further, if the proposed action ("Perform CIP process") does not improve the UV-Intensity, further analysis of the system is required, and there is a risk that the ballasting/deballasting operation has to be interrupted to find a suitable action.

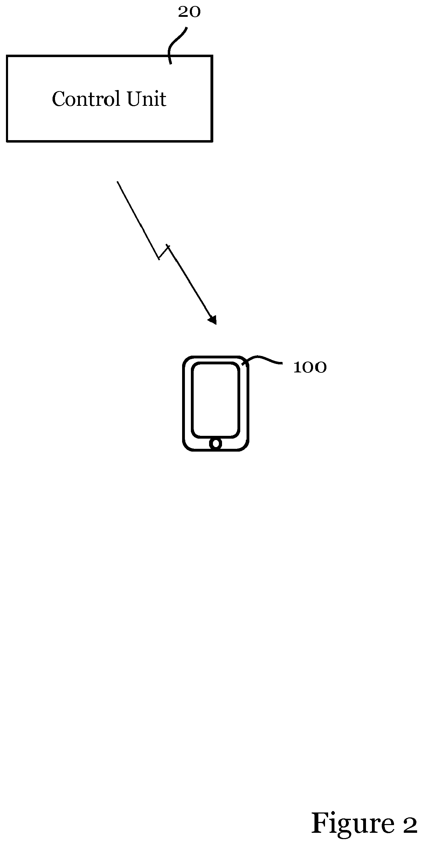

To resolve this issue, a controller device 100 is proposed as illustrated in Figure 2 according to an embodiment, such as e.g. a smart phone, a tablet or a laptop, being in wired or wireless communication with the BWTS control unit 20.

In this example, a remote device in the form of a smart phone 100 is envisaged for being in communication with the control unit 20. In this particular exemplifying embodiment, the smart phone 100 is in wireless communication with the control unit 20 utilizing for instance Bluetooth, WiFi or a regular wireless packet data channel established with the control unit 20. As is understood, the smart phone 100 may alternatively be connected to the control unit 20 via a cable, which is advantageous if the vessel is located in an area with no Internet and/or mobile network connection.

It may be envisaged that a BWTS operator located on the ship of the BWTS 1 connects to the control unit 20 using the smart phone 100, but it may alternatively be envisaged that the smart phone 100 is remotely located far away from the ship, such as at a land-located shipping company operating the ship. However, as is understood, the controller device 100 is a separate entity from the BWTS 1.

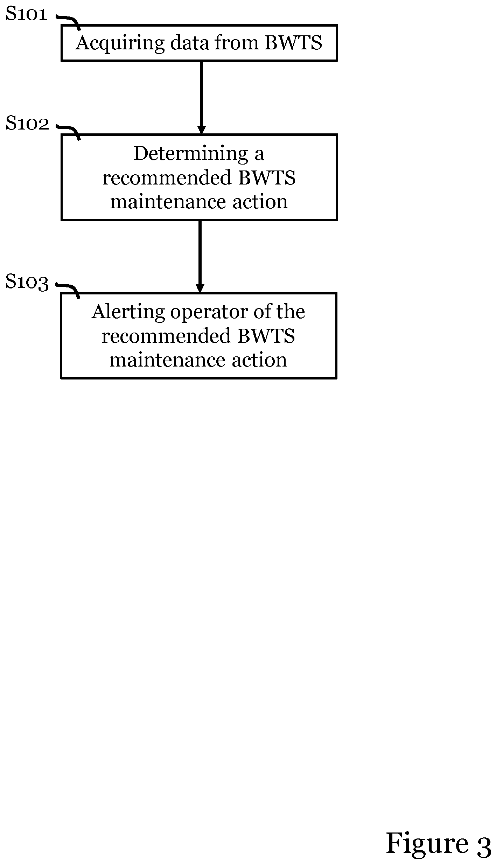

Figure 3 shows a flowchart illustrating a method of a controller device, in this example embodied by the smart phone 100, of remotely analysing performance of a BWTS according to an embodiment.

Assuming for instance that the control unit 20 in accordance with the above-mentioned example detects that the UV-intensity of the UV-lamps 64 is too low. An operator may be given an indication on the control panel accordingly or may already have the smart phone 100 wirelessly connected to the control unit 20, in which case the smart phone 100 itself may detect that the UV-intensity of the UV-lamps 64 is too low without being alerted by the control unit 20. In case it is desired that the smart phone 100 continuously should log the BWTS 1 for data, the smart phone may more or less permanently be connected to the control unit 20.

In a first step S101, the smart phone 100 acquires data from the control unit 20 of the BWTS 1 associated with the treatment of the ballast water. In this particular example, the smart phone 100 receives data in the form of a UV-intensity indication, which is associated with the radiation of the sea water as performed by the UV-reactor 60.

As is understood, the acquired data may be currently registered data or data having been registered over a longer period (or both) by the control unit 20.

The data may be received by the smart phone 100 in different forms. For instance, it may be envisaged that the data takes the form of an error code as previously described ("A-915"). In another example, a measured UV-intensity value is received.

Either way, control software executing on the smart phone 100 determines in step S102 from the received data if a BWTS maintenance action should be taken.

For instance, if the smart phone 100 receives an error code, the smart phone 100 may turn to a look-up table which holds an entry for the particular error code received ("A-915") indicating the source of the error ("UV lamp intensity too low") and a recommended maintenance action to be performed ("Perform CIP process").

It may alternatively be envisaged that the smart phone 100 concludes from the error code received ("A-915") the particular source of the error ("UV lamp intensity too low") and then determines one recommended BWTS maintenance action among a plurality of possible actions to be taken.

Thereafter, in step S103, the smart phone 100 alerts the operator of the recommended BWTS maintenance action determined in step S102.

The alert may be provided to the operator in many different forms. For instance, if the smart phone 100 executes a designated BWTS maintenance app, a visual alert may be provided to the operator on a smart phone display which even may comprise a visual instruction, such as a short instruction film, on how the recommended maintenance action practically is to be performed.

In another example, it may suffice to audially instruct the operator on which recommended maintenance action to perform.

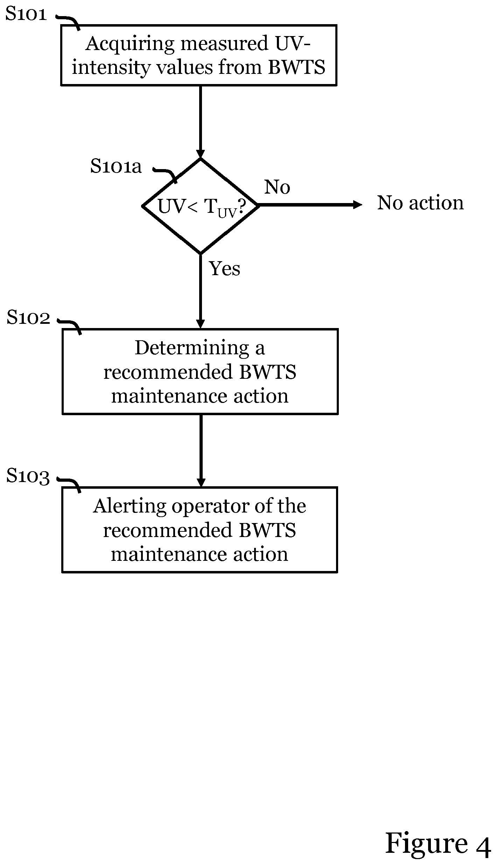

Figure 4 shows a flowchart illustrating a further embodiment, where the smart phone 100 acquires data in the form of measured values of a parameter associated with the treatment of the ballast water.

Thus, in step S101, the smart phone 1000 receives one or more measured values of the UV-intensity of the lamps 64 from the control unit 20.

In this embodiment, the smart phone 100 determines in step S101a whether or not one or more of the received measured UV values comply with a maintenance criterion. This may be a predetermined system criterion, or a criterion determined in advance or on-the-fly by the smart phone 100. Thus, the smart phone 100 may actively set a suitable maintenance criterion to be evaluated.

Thus, if one or more of the received measured UV values exceed a determined UV-intensity threshold value T_{UV}, the maintenance criterion is not considered to be complied with. If so, the intensity of the lamps 64 are indeed considered adequate and no further action is taken. The UV-intensity threshold value is advantageously set by the smart phone 100 taking a proactive role in the determination of an action to be recommended.

However, if the measured UV values do not exceed the UV-intensity threshold value T_{UV}, the UV-intensity is considered too low, and a recommended BWTS maintenance action is determined in step S102 ("Perform CIP process"). In other words, if the measured UV values do not exceed the UV-intensity threshold value T_{UV}, the maintenance criterion is indeed considered to be complied with.

The operator is alerted of the recommended BWTS maintenance action in step S103 as previously described.

Advantageously, any decision on performing maintenance may be transferred from the BWTS 1 itself to the software executing on the smart phone 100 and a maintenance action determination framework including actions to be recommended and triggers for recommending the actions in the form of threshold values for different measured BWTS parameter may be updated and modified centrally and thereafter distributed to any concerned controller device, in this case the smart phone 100.

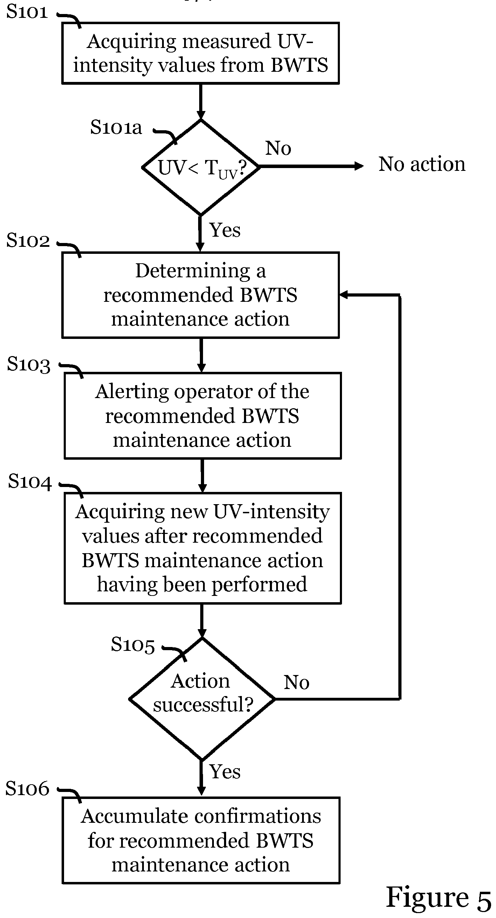

Figure 5 illustrates a further embodiment, wherein after the operator has been alerted of the recommended BWTS maintenance action (and performed the action, which may be confirmed by the operator ticking a check-box on the screen of the smart phone), the smart phone 100 acquires instances of the previously acquired data in step S104 - in this example again in the form of further measured UV-intensity values - from the control unit 20 of the BWTS 1 and determines in step S105 whether or not the recommended action is indicated to be successful.

Again, it may be envisaged that if the new measured UV-intensity values exceed the threshold value T_{UV}, the UV-intensity is considered adequate and the performed maintenance operation is deemed successful while if the measured UV-intensity values still do not exceed the threshold value T_{UV}, the recommended maintenance operation was unsuccessful, and another recommended BWTS maintenance action is determined in step S102 and alerted to the operator in step 103.

The new recommendation proposed by the smart phone 100 may for instance be to check pH-level in the CIP cleaning liquid. If the pH-level is too high, the operator will change the cleaning liquid in the CIP operation module 70 utilized to clean the UV-reactor 62 and new measured UV-intensity values acquired in step S104 will indicate in step S105 whether or not this was a successful action.

As is understood, numerous maintenance actions may potentially be performed based on acquired treatment data and it is the task of the smart phone 100 to recommend one action to be taken among the many potential actions.

In this particular exemplifying embodiment, order of priority among possible BWTS maintenance actions to be taken in respect of a too low UV-intensity may e.g. be (after the BWTS operation has been temporarily stopped):
1. perform CIP operation in order to clean UV-reactor,
2. check pH-value of CIP cleaning liquid (for possible change of liquid),
3. manually clean the UV sensor, and
4. replace the UV-lamps.

In other words, the above BWTS maintenance actions are recommended by the smart phone 100 one after the other to the operator. The recommended BWTS maintenance actions are generally predetermined actions forming a database from which the software executed on the smart phone 100 selects a recommended action.

The order of priority of the recommended BWTS maintenance actions may be based e.g. on work effort required for performing the action, where the most straightforward action typically would have the highest priority.

In another example, the order of priority may be based on historical data where the action having been indicated to most often be the most successful action has the highest priority.

It should be noted that an indication that a recommended maintenance action was successful in step S105 is valuable to the software executing on the smart phone 100 since a confirmation indeed is given that the recommended action was correct, even if no further actions are taken at this stage.

Thus, in an embodiment, confirmations of successful BWTS maintenance actions having been performed are accumulated in step S106 for each respective action performed.

As a result of the smart phone 100 concluding whether or not a recommended action was successful or not in step S105 and accumulating confirmations in step S106 for each recommended action having been performed, the order of priority may well change in case for example action no. 2 turns out to be successful more often than action no. 1.

It may be envisaged that machine-learning (ML) is applied by the smart phone 100 for determining which action to recommend, where a reward in form of a confirmation of a successful recommendation is helpful for training an ML model such that the model knows which recommended actions are successful. ML models based on data analytics from other BWTSs can be applied on the smart phone 100 to support local BWTS. Thus, the smart phone 100 may recommend actions to the local BWTS based on information from other BWTSs.

In another embodiment, assuming that the smart phone 100 acquires measured values of the UV-intensity of the lamps 64 where one of the measured value indicates a UV-intensity of zero; the smart phone 100 will then conclude that the lamp for which the UV-intensity is zero is broken and alert the operator accordingly.

With such an alert, the smart phone 100 may provide an article number of the lamp in question such that the operator may order a new lamp in case he/she does not have any such lamp available at the moment.

Further in line with the above given example, the smart phone 100 may provide a CIP cleaning liquid article number along with recommended action no. 2 hereinabove.

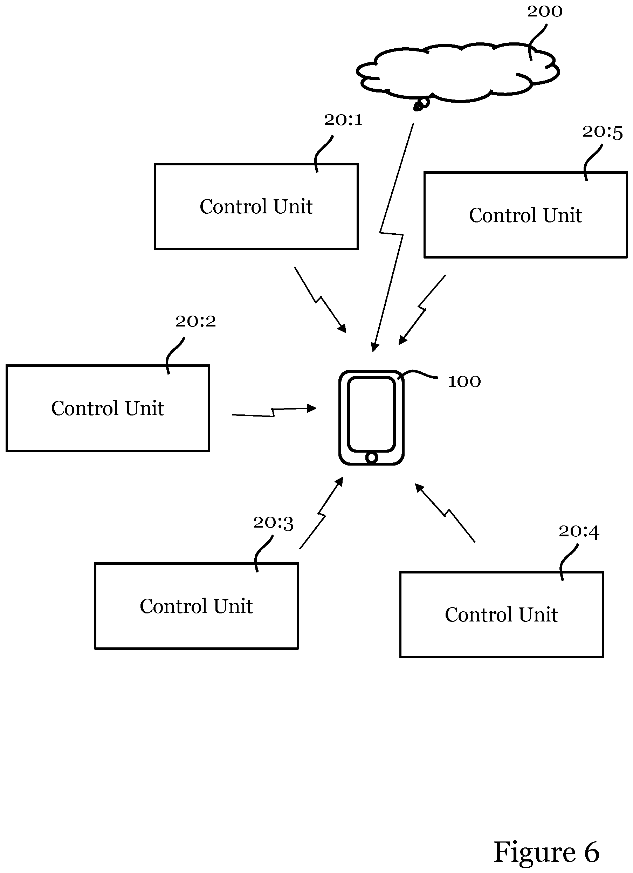

Figure 6 illustrates a further embodiment, in which a controller device in the form of the smart phone 100 communicates with control units 20:1-20:5 of five different ships. The smart phone 100 may be operated by personnel at a land-located shipping company operating the five ships and any recommended maintenance action(s) may be communicated to a corresponding controller device located at each ship such that an operator at each ship may perform the recommended action.

Further advantageous is that in case a recommended maintenance action is indicated to be successful (or unsuccessful) in step S105, the smart phone 100 is able to conclude which action(s) is best practice for a number of ships (and not just a single ship), thereby providing for a more robust maintenance action determination framework.

Further illustrated in Figure 6 is that the smart phone 100 may fetch information from the cloud 200 (e.g. from a cloud server). It may further be envisaged that other BWTSs have uploaded information to the cloud 200 which advantageously may be utilized by the smart phone 100.

While embodiments described hereinabove uses UV-intensity of the UV-reactor as an example of data from the BWTS associated with the treatment of the ballast water on which a recommended BWTS maintenance action is based, numerous other parameters may be envisaged.

Another example parameter is pressure drop over the filter unit 44. Recommended BWTS maintenance actions for such parameter is for instance performing backflushing (more often or even continuously), decrease the flow of water through the BWTS 1, manually clean the filter unit 44, etc. If the system enters continuous backflush repeatedly despite relatively clean water, the smart phone 100 can recommend the operator to inspect the filter for blockage, which may require manual cleaning of the filter.

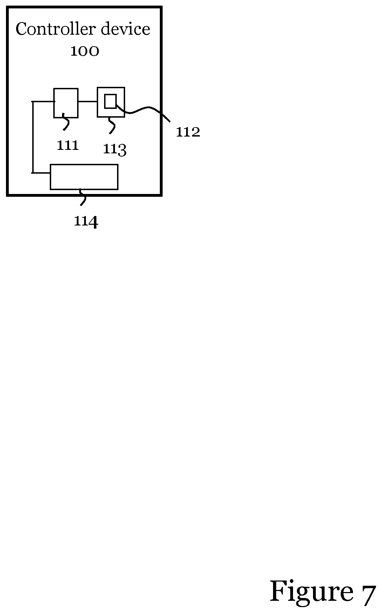

Figure 7 illustrates a controller device 100 such as e.g. a smart phone configured to remotely analyse performance of a BWTS of a marine vessels according to an embodiment, where the steps of the method performed by the controller device 100 in practice are performed by a processing unit 111 embodied in the form of one or more microprocessors arranged to execute a computer program 112 downloaded to a storage medium 113 associated with the microprocessor, such as a Random Access Memory (RAM), a Flash memory or a hard disk drive. The processing unit 111 is arranged to cause the controller device 100 to carry out the method according to embodiments when the appropriate computer program 112 comprising computer-executable instructions is downloaded to the storage medium 113 and executed by the processing unit 111. The storage medium 113 may also be a computer program product comprising the computer program 112. Alternatively, the computer program 112 may be transferred to the storage medium 113 by means of a suitable computer program product, such as a Digital Versatile Disc (DVD) or a memory stick. As a further alternative, the computer program 112 may be downloaded to the storage medium 113 over a network. The processing unit 111 may alternatively be embodied in the form of a digital signal processor (DSP), an application specific integrated circuit (ASIC), a field-programmable gate array (FPGA), a complex programmable logic device (CPLD), etc. The controller device 100 further comprises a communication interface 114 (wired or wireless) over which it is configured to transmit and receive data.

Hence, the method according to the herein disclosed embodiments are suitable to be performed by a controller device 100 residing in a cloud computational environment. Therefore, although a single processing circuitry 111 is illustrated in Figure 7, the processing circuitry 111 may be distributed among a plurality of devices, or nodes. The same applies to the computer program 112.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

Below, a non-limiting and itemized listing of aspects of the present disclosure, presented for the purpose of describing various features and combinations provided by the invention in certain of its aspects, is provided.

Method of a controller device (100) of remotely analysing performance of a ballast water treatment system (1), BWTS, of a marine vessel, comprising:
acquiring (S101) data from the BWTS (1) associated with the treatment of the ballast water;
determining (S102), based on the acquired data, a recommended BWTS maintenance action to be performed; and
alerting (S103) an operator of the BWTS (1) of the recommended BWTS maintenance action to be performed.

The method as described above, wherein the acquiring (S101) further comprises:
acquiring an error code from the BWTS (1) associated with the treatment of the ballast water; and the determining (S102) further comprising:
determining, based on the acquired error code, a recommended BWTS maintenance action to be performed.

The method as described above, wherein each acquired error code is associated with a recommended BWTS maintenance action to be performed.

The method as described above, wherein the acquiring (S101) further comprises:
acquiring one or more measured values of a parameter associated with the treatment of the ballast water; the method further comprising:
determining whether or not said one or more measure values comply with a maintenance criterion, and if so
determining, based on said parameter, a recommended BWTS maintenance action to be performed.

The method as described above, further comprising:
receiving an indication when the recommended BWTS maintenance action has been performed.

The method as described above, further comprising:
acquiring (S104) one or more further instances of said data from the BWTS (1); and
determining (S105) from the one or more further instances of said data whether or not the recommended BWTS maintenance action was successful.

The method as described above, further comprising:
determining (S102), based on the one or more further instances of acquired data from the BWTS (1), another recommended BWTS maintenance action to be performed; and
alerting (S103) the operator of the BWTS (1) of said another recommended BWTS maintenance action to be performed.

The method as described above, further comprising:
accumulating (S106) confirmations for recommended BWTS maintenance actions having been successfully performed.

The method as described above, wherein the acquiring (S101) of data further comprising:
acquiring data from the BWTSs of a plurality of marine vessels; the determining (S102) comprising:
determining, based on the acquired data of each BWTS, a recommended BWTS maintenance action to be performed for the marine vessel associated with said each BWTS; and the alerting (S103) comprising:
alerting an operator of said each BWTS of the recommended BWTS maintenance action to be performed.

The method as described above, wherein order of priority of a recommended BWTS maintenance action among a plurality of possible recommended BWTS maintenance actions is based on work effort required for performing the action.

The method as described above, wherein order of priority of a recommended BWTS maintenance action among a plurality of possible recommended BWTS maintenance actions is based on historical data indicating how successful a recommended action has been.

The method as described above, wherein the recommended BWTS maintenance action further is configured to comprise article number of an object to be changed.

The method as described above, wherein the alert is provided to the operator as a visual instruction on how the recommended BWTS maintenance action is to be performed.

A computer program (112) comprising computer-executable instructions for causing a controller device (100) to perform steps as described above when the computer-executable instructions are executed on a processing unit (111) included in the controller device (100).

A computer program product comprising a computer readable medium (113), the computer readable medium having the computer program (112) as described above embodied thereon.

A controller device (100) configured to remotely analyse performance of a ballast water treatment system (1), BWTS, of a marine vessel, comprising a processing unit (111) and a memory (113), said memory containing instructions (112) executable by said processing unit (111), whereby the controller device (100) is operative to:
acquire data from the BWTS (1) associated with the treatment of the ballast water;
determine, based on the acquired data, a recommended BWTS maintenance action to be performed; and
alert an operator of the BWTS (1) of the recommended BWTS maintenance action to be performed.

The controller device (100) as described above, further being operative to, when acquiring data:
acquire an error code from the BWTS (1) associated with the treatment of the ballast water; and further being operative to, when determining a recommended BWTS maintenance action to be performed:
determine, based on the acquired error code, a recommended BWTS maintenance action to be performed.

The controller device (100) as described above, wherein each acquired error code is associated with a recommended BWTS maintenance action to be performed.

The controller device (100) as described above, further being operative to, when acquiring data:
acquire one or more measured values of a parameter associated with the treatment of the ballast water; and to:
determine whether or not said one or more measure values comply with a maintenance criterion, and if so
determine, based on said parameter, a recommended BWTS maintenance action to be performed.

The controller device (100) as described above, further being operative to:
receive an indication when the recommended BWTS maintenance action has been performed.

The controller device (100) as described above, further being operative to:
acquire one or more further instances of said data from the BWTS; and to
determine from the one or more further instances of said data whether or not the recommended BWTS maintenance action was successful.

The controller device (100) as described above, further being operative to:
determine, based on the one or more further instances of acquired data from the BWTS, another recommended BWTS maintenance action to be performed; and to
alert the operator of the BWTS of said another recommended BWTS maintenance action to be performed.

The controller device (100) as described above, further being operative to:
accumulate confirmations for recommended BWTS maintenance actions having been successfully performed.

The controller device (100) as described above, further being operative to, when acquiring data:
acquire data from the BWTSs of a plurality of marine vessels; and further being operative to, when determining a recommended BWTS maintenance action to be performed:
determine, based on the acquired data of each BWTS, a recommended BWTS maintenance action to be performed for the marine vessel associated with said each BWTS (1); and further being operative to, when alerting an operator:
alert an operator of said each BWTS (1) of the recommended BWTS maintenance action to be performed.

The controller device (100) as described above, wherein order of priority of a recommended BWTS maintenance action among a plurality of possible recommended BWTS maintenance actions is based on work effort required for performing the action.

The controller device (100) as described above, wherein order of priority of a recommended BWTS maintenance action among a plurality of possible recommended BWTS maintenance actions is based on historical data indicating how successful a recommended action has been.

The controller device (100) as described above, wherein the recommended BWTS maintenance action further is configured to comprise article number of an object to be changed.

The controller device (100) as described above, being operative to provide the alert to the operator as a visual instruction on how the recommended BWTS maintenance action is to be performed.

## Claims

1. Method of a controller device (100) of remotely analysing performance of a ballast water treatment system (1), BWTS, of a marine vessel, comprising:
acquiring (S101) data from the BWTS (1) associated with the treatment of the ballast water;
determining (S102), based on the acquired data, a recommended BWTS maintenance action to be performed; and
alerting (S103) an operator of the BWTS (1) of the recommended BWTS maintenance action to be performed.

2. The method of claim 1, the acquiring (S101) further comprising:
acquiring an error code from the BWTS (1) associated with the treatment of the ballast water; and the determining (S102) further comprising:
determining, based on the acquired error code, a recommended BWTS maintenance action to be performed.

3. The method of claim 2, wherein each acquired error code is associated with a recommended BWTS maintenance action to be performed.

4. The method of claim 1, the acquiring (S101) further comprising:
acquiring one or more measured values of a parameter associated with the treatment of the ballast water; the method further comprising:
determining whether or not said one or more measure values comply with a maintenance criterion, and if so
determining, based on said parameter, a recommended BWTS maintenance action to be performed.

5. The method of any one of the preceding claims, further comprising:
receiving an indication when the recommended BWTS maintenance action has been performed.

6. The method of claim 5, further comprising:
acquiring (S104) one or more further instances of said data from the BWTS (1); and
determining (S105) from the one or more further instances of said data whether or not the recommended BWTS maintenance action was successful, and optionally
determining (S102), based on the one or more further instances of acquired data from the BWTS (1), another recommended BWTS maintenance action to be performed; and
alerting (S103) the operator of the BWTS (1) of said another recommended BWTS maintenance action to be performed.

7. The method of claim 6, further comprising:
accumulating (S106) confirmations for recommended BWTS maintenance actions having been successfully performed.

8. The method of any one of the preceding claims, the acquiring (S101) of data further comprising:
acquiring data from the BWTSs of a plurality of marine vessels; the determining (S102) comprising:
determining, based on the acquired data of each BWTS, a recommended BWTS maintenance action to be performed for the marine vessel associated with said each BWTS; and the alerting (S103) comprising:
alerting an operator of said each BWTS of the recommended BWTS maintenance action to be performed.

9. The method of any one of the preceding claims, wherein order of priority of a recommended BWTS maintenance action among a plurality of possible recommended BWTS maintenance actions is based on historical data indicating how successful a recommended action has been.

10. The method of any one of the preceding claims, wherein the recommended BWTS maintenance action further is configured to comprise article number of an object to be changed.

11. The method of any one of the preceding claims, the alert being provided to the operator as a visual instruction on how the recommended BWTS maintenance action is to be performed.

12. A computer program (112) comprising computer-executable instructions for causing a controller device (100) to perform steps recited in any one of claims 1-11 when the computer-executable instructions are executed on a processing unit (111) included in the controller device (100).

13. A computer program product comprising a computer readable medium (113), the computer readable medium having the computer program (112) according to claim 12 embodied thereon.

14. A controller device (100) configured to remotely analyse performance of a ballast water treatment system (1), BWTS, of a marine vessel, comprising a processing unit (111) and a memory (113), said memory containing instructions (112) executable by said processing unit (111), whereby the controller device (100) is operative to:
acquire data from the BWTS (1) associated with the treatment of the ballast water;
determine, based on the acquired data, a recommended BWTS maintenance action to be performed; and
alert an operator of the BWTS (1) of the recommended BWTS maintenance action to be performed.

15. The controller device (100) of claim 14, further being operative to, when acquiring data:
acquire an error code from the BWTS (1) associated with the treatment of the ballast water; and further being operative to, when determining a recommended BWTS maintenance action to be performed:
determine, based on the acquired error code, a recommended BWTS maintenance action to be performed.

16. The controller device (100) of claim 15, further being operative to, when acquiring data:
acquire one or more measured values of a parameter associated with the treatment of the ballast water; and to:
determine whether or not said one or more measure values comply with a maintenance criterion, and if so
determine, based on said parameter, a recommended BWTS maintenance action to be performed.

17. The controller device (100) of any one of claims 14-16, further being operative to:
receive an indication when the recommended BWTS maintenance action has been performed, and optionally further being operative to:
acquire one or more further instances of said data from the BWTS; and to
determine from the one or more further instances of said data whether or not the recommended BWTS maintenance action was successful.

18. The controller device (100) of claim 17, further being operative to:
determine, based on the one or more further instances of acquired data from the BWTS, another recommended BWTS maintenance action to be performed; and to
alert the operator of the BWTS of said another recommended BWTS maintenance action to be performed.

19. The controller device (100) of any one of claims 14-18, further being operative to, when acquiring data:
acquire data from the BWTSs of a plurality of marine vessels; and further being operative to, when determining a recommended BWTS maintenance action to be performed:
determine, based on the acquired data of each BWTS, a recommended BWTS maintenance action to be performed for the marine vessel associated with said each BWTS (1); and further being operative to, when alerting an operator:
alert an operator of said each BWTS (1) of the recommended BWTS maintenance action to be performed.
